# EUROPEAN PATENT SPECIFICATION

(11) **EP 3 565 980 B1**
(45) Date of publication and mention of the grant of the patent: **29.11.2023**
(21) Application number: 17808010.7
(22) Date of filing: 09.11.2017
(51) Int. Cl.: F16B 39/10, F03D 1/06, F16B 39/24, F16B 43/00, F03D 13/20

(54) **SAFETY DEVICE FOR BOLT CONNECTIONS**
SICHERHEITSVORRICHTUNG FÜR BOLZENVERBINDUNGEN
DISPOSITIF DE SÉCURITÉ POUR CONNEXIONS À BOULON

(30) Priority: 08.02.2017 DE 102017201986
(43) Date of publication of application: 13.11.2019
(73) Proprietor: Siemens Gamesa Renewable Energy A/S, 7330 Brande (DK)
(72) Inventor: NIELSEN, Per, 9310 Vodskov (DK)
(74) Representative: SGRE-Association
(86) International application number: PCT/EP2017/078779
(87) International publication number: WO 2018/145783

(56) References cited:
- WO-A1-02/101249
- JP-A- 2015 158 249
- US-A- 2 591 631
- US-A- 2 758 628
- US-A- 4 657 457
- US-A- 5 624 218

## Description

The invention refers to a safety device for bolt connections.

Bolt connections are used in many mechanical fields, where two parts are tightly fixed together. For example a tower segment of a wind turbine is fixed to a tower foundation by means of bolt connections, another example is the connection of the blades to the hub of a wind turbine. In these examples the bolt connections are arranged in a ring form, comprising the anchor bolts arranged at the first part, which anchor bolts are passed through bores provided in a mounting flange of the second part, on which bolts respective nuts are screwed. It is known that bolt connections may experience strong forces which may supersede the force the respective bolt is designed for or can withstand. The bolts can either fail in tension or shear. Once a bolt fails this failure can at best result in the deformation of the bolt, at worst the bolt can brake apart. Due to the enormous force and tension resting on the braking bolt a high risk for a person standing next to the braking bolt is given, and fragments of the broken bolt can be shot away in the surrounding damaging items standing next or bearing a severe risk for a person.

JP 2015/158249 A proposes a temporary fixture that prevents damage in equipment during transportation and the temporary fixtures comprising bolt, nuts, screws etc. The temporary fixtures can be detachable attached on a mounting portion and with the use of a connecting member connect the temporary fixtures with the mounting portion thereby preventing the damage of equipment.

It is an object of the invention to provide a safety device for bolt connections adapted to avoid bolt fragments shot away the arrangement in an uncontrolled manner.

For solving the problem a safety device for bolt connections is disclosed, comprising two or more washers with a bore for receiving a bolt, with each washer comprising an eye, at least one cable to be passed through the eyes and at least one elastic means secured or to be secured to at least one end of the cable.

The safety device according to the invention comprises several washers, with a single washer being mounted on a bolt which is to be protected. When mounting the two respective parts by means of the bolt connections each bolt is equipped with a washer. Each washer comprises an eye through which a cable is passed. All washers are connected by means of at least one cable running through the respective eyes. The cable itself is connected to at least one elastic means.

In case one of the bolts brakes the respective bolt fragment is secured by means of the washer and the cable, which connects the washer to the respective neighbouring washers and thus to the respective neighbouring bolts which are not broken. The cable therefore holds back the respective broken bolt fragment still fixed by means of the washer to the cable arrangement. The enormous force with which the bolt fragment is shot away from the bolt connection is compensated by the elastic means, which is compressed or squeezed. This avoids the cable being torn apart when the bolt brakes.

The inventive safety device secures all bolts by means of the washers to the respective cable connecting all the washers and therefore avoids the danger that a bolt fragment can be shot away from the arrangement in an uncontrolled way, as it is fixed or secured by means of the respective washer and the cable connection.

The eye arranged at each respective washer is according to the invention a tube extending along a side of the washer. The cable therefore is guided in a tube, which tube is tightly fixed to the ring part of the washer.

Each washer can be separately mountable on the bolt. When fixing the respective parts by means of the bolt connection, each washer is placed on the respective bolt before the respective nut is screwed on a bolt. This makes it easy to bring the respective bolts in the correct position with the respective eye or tube having the correct orientation or position for simply passing the cable through the neighbouring eyes or tubes. If the bolt connections are arranged in a ring form the respective eyes or tubes are all arranged for example at the outer side of the ring, so that the cable can be installed along the outer side of the bolt arrangement.

According to an alternative each washer is fixed to or is an integral part of a nut to be screwed on the bolt. According to this embodiment the respective washer is fixed to the nut by means of a glue or another appropriate connection means, or is formed in one piece with the nut. It can be fixed to the nut by means of a weld connection. The washer is attached to the bolt when the nut is screwed on the bolt. For bringing the eye or tube in the respective position it is necessary to screw the nut in the respective position.

As explained above the elastic means to which the cable is connected or secured is used for compensating the force resting on the broken bolt fragment and on the cable to which the washer and thus the bolt fragment is connected. The elastic means therefore is preferably realised as a spring element, preferably as a helical spring. This spring element can either be compressed or extended when compensating the respective force depending on how the cable is connected or secured to the spring element.

Regarding the connection or securing of the cable to the elastic means, especially the spring element respectively the helical spring, several alternative embodiments are disclosed. According to a first embodiment the cable is passed with both ends in opposite directions through the elastic means, especially the helical spring, with each end being secured to the respective end of the elastic means. The cable is arranged in a ring form. Both ends are passed through the elastic means in opposite directions and are fixed to the respective end of the elastic means. When a force rests on the cable the elastic means therefore is compressed, as the cable ends move to each other.

According to another alternative the cable can be secured with one end to a washer and with the other end it is passed through the elastic means, especially the helical spring and is secured to the end of the elastic means. This arrangement is used when the bolts are for example arranged in a line, or when several separate cables and several separate elastic means are used for securing respective groups of bolts. Also in this case the elastic means is compressed when a force rests on the cable.

According to a third alternative the inventive safety device comprises several cables and several elastic means, especially helical springs, with each cable is passed through the eyes of several washers and is secured with both ends to separate elastic means. The cables and elastic means are arranged in an alternating manner, with the cables being either attached to the adjacent end of the elastic means, or with each cable being passed through the elastic means, with the end being secured to the remote end of the elastic means. According to the first alternative the elastic means is extended when a force rests on the cable, according to the second alternative the elastic means is compressed, when a force rests on the cable. So either the ends of two separate cables are passed in opposite directions through a common elastic means with each end being secured to the respective end of the elastic means, or each end of the elastic cable is secured directly to the neighbouring end of the respective elastic means.

The respective cable is preferably secured to the elastic means by using wire locks attached to the cable close to the elastic means. These wire locks for example have a U-form embedding the wire. A respective clamping bar or the like is screwed on this U-form part so that the wire lock is tightly fixed to the cable.

The invention also refers to a washer for a safety device as disclosed above, with a disc like part comprising a bore and with an eye fixed to or arranged at the disc like part. The eye is preferably realised as a tube fixed or arranged to the side of the disc like part.

Preferably the eye or tube is fixed by a weld connection to the disc like part.

Finally the invention refers to use of a safety device as disclosed above with bolt connections connecting parts of a wind turbine, especially of a tower section fixed to a foundation or of tower sections fixed to each other or of blades fixed to a hub.

The invention is explained in detail with reference to the figures, which show:
- Fig. 1: shows a top view of an inventive washer,
- Fig. 2: shows a side view of the washer of fig. 1,
- Fig. 3: shows a principle sketch of a safety arrangement used at bolt connections fixing a tower section of a wind turbine to a tower foundation,
- Fig. 4: is a principle sketch of the connection of the cable ends to an elastic element according to a first embodiment,
- Fig. 5: is a principle sketch of the connection of the cable ends to a washer and an elastic element according to a second embodiment,
- Fig. 6: is a principle sketch of the attachment of several cables to several elastic elements,
- Fig. 7: is a top view of a nut equipped with a washer, and
- Fig. 8: is a side view of the nut with the washer of fig. 7.

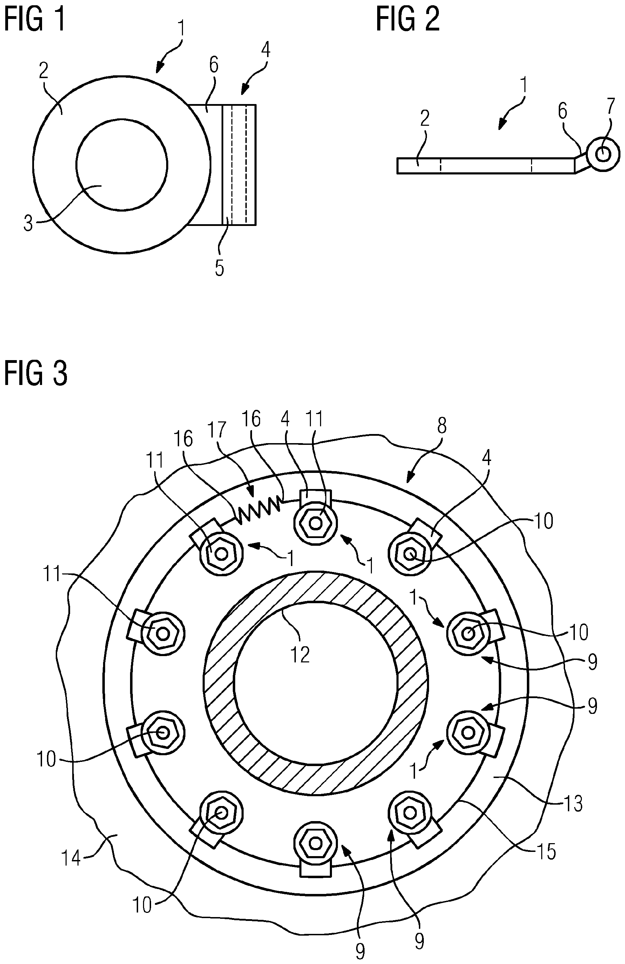

Fig. 1 shows an inventive washer 1 being part of a safety device according to the invention. The washer 1 comprises a disc like part 2 with a central bore 3 for receiving a bolt of a bolt connection which is to be secured by means of the washer respectively the safety device.

An eye 4 realised as a tube 5 is fixed to the side of the disc like part by means of a weld connection 6. The eye 4 respectively the tube 5 has a bore 7 for accommodating a table as explained below.

The washer respectively the disc like part 2 and the eye 4 are made of metal, as they are used for securing metal bolts of a bolt connection.

Fig. 3 shows a principle sketch of an inventive safety device 8. The safety device is used for securing bolt connections 9 comprising respective bolts 10 on which respective nuts 11 are screwed. The bolt connections 9 are used for fixing a tower section 12 comprising a radial mounting flange 13 to a tower foundation 14 which is only shown in part.

When mounting the tower section 12 to the foundation 14, in which the respective bolts 10 are arranged, the mounting flange 13 is positioned above the bolts 10, which are arranged in a ring form. The bolts are passed through respective opening in the mounting flange 13. When the flange 13 rests on the foundation a washer 1 is placed on each bolt 10, with the bolt 10 being passed through the bore of the washer 1. The washers 1 are arranged that the respective eye 4 shows to the outer side of the arrangement. After each bolt 10 is equipped with a washer 1 the respective nuts 11 are screwed on the bolts 10. When all nuts 11 are screwed on the bolts 10 the tower section 12 is tightly fixed to the foundation 14.

Now the safety device 8 is installed. The safety device 8 comprises a cable 15, preferably a steel wire cable. The cable is passed through all eyes 4 or tubes 5 of the washers 1. The ends 16 of the cable are fixed our secured to an elastic means 17, which preferably is or comprises a spring element 18, preferably a helical spring.

With this arrangement, especially via the cable 15, all washers 1 are connected and thus the respective bolts 10 with the nuts 11 screwed upon are connected too. In case one of the bolts 10 brakes due to an overload and the broken bolt fragment is due to the enormous force resting on the respective bolt connection shot away from its mounting position the fragment is secured by means of the cable, so that the bolt fragment cannot fly in an uncontrolled way into the surrounding. It is fixed to the cable 15 and is thus held close to the bolt connection arrangement. The force or tension resting on the broken bolt fragment is taken by the cable 15 and is compensated by the elastic means 17, which is preferably compressed, when the respective ends 15 are passed through the elastic means 17, or is extended, when the respective ends are fixed directly to the respective neighbouring end of the elastic means 17. In any case the broken bolt fragment is held close to the arrangement and cannot fly into the surrounding in an uncontrolled manner.

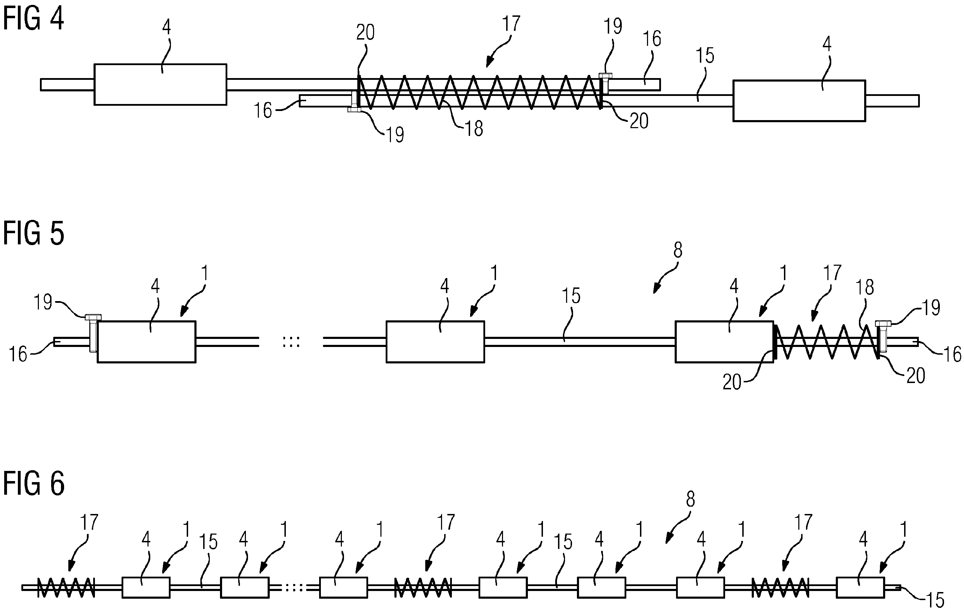

Fig. 4 shows a first alternative of the connection of the cable 15 to the elastic means 17. As fig. 4 clearly shows the ends 16 of the cable 15 are passed through the elastic means 17 in opposite direction. The elastic means 17 comprises a spring element 18, for example a helical spring having a central opening, through which the ends 16 can be passed.

Each end 16 is secured by means of a wire lock 19 to the respective end 20 of the elastic means 17 respectively the spring element 18. The wire lock 19 for example comprises a U-shaped part embedding the cable, on which U-shaped part a clamping bar or the like is arranged and fixed by means of respective nuts. So the wire lock 19 is tightly clamped or fixed to the respective end 16 of the cable 15 and thus the cable 15 is arranged or fixed to the respective end of the elastic means 17. There may certainly be some distance between the wire lock and the elastic means 17, nevertheless the respective cable end is secured to the elastic means and cannot be pulled through it.

When a tension occurs on the cable 15 the ends 16 are pulled together, resulting in a compression of the elastic element 17. This compression compensates the force resting on the cable 15 resulting from the braking of a bolt.

Fig. 5 shows a principle sketch of another embodiment of the inventive safety device 8. Fig. 5 shows several washers 1 with their eyes 4 through which a cable 15 is guided. The first end 16 of the cable 15 is secured to the washer 1 shown on the left side of a wire lock 19 as explained above.

The second end 16 of the wire 15 is passed through a elastic means 17 also comprising in this embodiment a spring element 18 in form of a helical spring. The left end 20 of the elastic means 17 abuts the right side of the eye 4 of the washer 1 shown on the right side. At the other end 20 of the elastic means 17 a wire lock 19 is attached to the cable 15 for securing the cable at this end 20 to the elastic means 17.

If a force is applied to the wire 15 by a braking bolt being secured by means of the cable 15 the cable 15 is moved resulting in the compression of this elastic means 17. The elastic means 17 compensates the force or tension resting on the cable 15, with the bolt fragment being secured to the safety device 8.

With reference to the example shown in fig. 3 several of the safety devices shown in fig. 5 are arranged in circumferential direction. So in this embodiment several separate cables 15 and several separate elastic means 17 are incorporated in the complete safety device arrangement for securing all bolts 10 of the bolt connection.

Fig. 6 shows a third embodiment of a safety device 8. This safety device comprises also several cables 15 being passed through the eyes 4 of several washers 1. Each end of each cable 15 is secured to the neighbouring end of the respective elastic means 17 which can also in this embodiment be realised by means of a spring element or a helical spring. The whole safety device can be also arranged in a ring shaped manner or in a linear manner. In this embodiment, when a force or tension is applied on any of the cables 15, the respective cable 15 is moved resulting in an extension or elongation of the respective elastic means 17 coupled to the respective cable 15 compensating the force or tension resting on the cable 15. The respective bolt fragment which is broken is also in this embodiment safely secured and cannot fly into the surrounding in an uncontrolled way.

While fig. 6 shows the securement of the respective ends 16 of the respective cables 15 to the neighbouring ends of the respective elastic means 17, it is certainly possible to secure the ends of neighbouring cables 15 similar to the way as shown in fig. 4, but with passing the ends of the separate cables in opposite directions through a common elastic means 17. In this case, when a bolt brakes, the respective elastic means 17 is compressed.

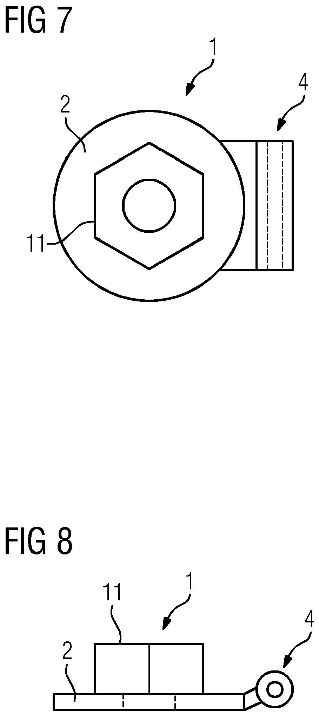

Finally fig. 7 and 8 show an embodiment of another inventive washer 1 which is tightly secured or formed as an integral part of a nut 11. The washer comprises the disc like part 2 with the eye 4 fixed to it, its overall shape is comparable to the washer 1 shown in fig. 1 and 2. But the washer 1 according to figs. 7 and 8 is not a separate item but a combined item also comprising the nut 11.

The washer 1 can be attached to the nut by means of a glue or something comparable. It can also be attached by a welded connection, so that washer 1 and nut 11 are an integral one-piece item. The use of this combined washer-nut-item is somehow different to using the washer 1 and the nut 11 as separate parts. After the pieces which are to be connected by means of the bolt connections are attached or positioned relative to each other with the bolts 10 being passed through the respective bores in the mounting section of the other part, each nut 11 is screwed together with the washer 1 on the bolt 10. The nut is screwed until it tightly fixes the respective bolt connection. In the final mounting position the respective eye 4 is again positioned for example at the outer circumference of the ring arrangement of the washers so that the wire can easily be passed through all eyes 4. Also this combined washer-nut-item allows for safely securing the connective bolts 10.

Although the present invention has been described in detail with reference to the preferred embodiment, the present invention is not limited by the disclosed examples from which the skilled person is able to derive other variations without departing from the scope of the invention, which is described in the appended claims.

## Claims

1. A safety device for bolt connections comprising two or more washers (1) with a disc like part (2) and a bore (3) for receiving a bolt (10), wherein each washer (1) comprising an eye (4) fixed to the disc like part (2), at least one cable (15) passing through the eye (4) and at least one elastic means (17) secured to at least one end (16) of the cable (15),
**characterised in that** the eye (4) being a tube (5) extending along a side of the washer (4).

2. Safety device according to claim 1, with each washer (1) being separately mountable on the bolt (10), or with each washer (1) being fixed to or being an integral part of a nut (11) to be screwed on a bolt (10).

3. Safety device according to one of the preceding claims, with the elastic means (17) being a spring element (18).

4. Safety device according to claim 3, with the spring element (18) being a helical spring.

5. Safety device according to one of the preceding claims, with the cable (15) passingwith both ends (16) in opposite directions through the elastic means (17), especially the helical spring, with each end (16) secured to the respective end (20) of the elastic means (17) .

6. Safety device according to one of the claims 1 to 4, with the cable (15) secured with one end (16) to a washer (1) and with the other end (16) passing through the elastic means (17), especially the helical spring and secured to the end (20) of the elastic means (17).

7. Safety device according to one of the claims 1 to 6, comprising several cables (15) and several elastic means (17), especially helical springs, with each cable (15) passing through the eyes (4) of several washers (1) and with both ends (16) of each cable (17) being secured to separate elastic means (17).

8. Safety device according to claim 7, with the ends (16) of two separate cables (15) passing in opposite directions through a common elastic means (17) with each end (16) being secured to the respective end (20) of the elastic means, or with the end (16) of the respective cable (15) being secured directly to the neighboring end (20) of the respective elastic means (17).

9. Safety device according to one of the preceding claims, with the cable (15) being secured by means of wire locks (19) attached to the cable (15).

10. Washer for a safety device according to one of the preceding claims, with a disc like part (2) comprising a bore (3) and with an eye (4) fixed to the disc like part (2),
**characterised in that** the eye (4) being a tube (5) fixed to the side of the disc like part (2) of the washer.

11. Washer according to claim 10, with the eye (4) being welded to the disc like part (2).

12. Use of a safety device according to one of the claims 1 to 9 with bolt connections connecting parts of a wind turbine, especially of a tower section (12) fixed to a foundation (14) or of tower sections fixed to each other or of blades fixed to a hub.

## Patentansprüche

1. Sicherheitsvorrichtung für Bolzenverbindungen, umfassend zwei oder mehr Unterlegscheiben (1) mit einem scheibenförmigen Teil (2) und einer Bohrung (3) zum Aufnehmen eines Bolzens (10), wobei jede Unterlegscheibe (1) eine an dem scheibenförmigen Teil (2) befestigte Öse (4), mindestens ein durch die Öse (4) verlaufendes Kabel (15) und mindestens ein an mindestens einem Ende (16) des Kabels (15) befestigtes elastisches Mittel (17) umfasst,
**dadurch gekennzeichnet, dass** die Öse (4) ein Rohr (5) ist, das sich entlang einer Seite der Unterlegscheibe (4) erstreckt.

2. Sicherheitsvorrichtung gemäß Anspruch 1, wobei jede Unterlegscheibe (1) separat auf dem Bolzen (10) montierbar ist oder wobei jede Unterlegscheibe (1) an einer auf einen Bolzen (10) aufzuschraubenden Mutter (11) befestigt oder ein einstückiger Bestandteil davon ist.

3. Sicherheitsvorrichtung gemäß einem der vorhergehenden Ansprüche, wobei das elastische Mittel (17) ein Federelement (18) ist.

4. Sicherheitsvorrichtung gemäß Anspruch 3, wobei das Federelement (18) eine Spiralfeder ist.

5. Sicherheitsvorrichtung gemäß einem der vorhergehenden Ansprüche, wobei das Kabel (15) mit zwei Enden (16) in entgegengesetzter Richtung durch das elastische Mittel (17), insbesondere die Spiralfeder, hindurchgeführt wird und jedes Ende (16) an dem jeweiligen Ende (20) des elastischen Mittels (17) befestigt wird.

6. Sicherheitsvorrichtung gemäß einem der Ansprüche 1 bis 4, wobei das Kabel (15) mit einem Ende (16) an einer Unterlegscheibe (1) befestigt wird und das andere Ende (16) durch das elastische Mittel (17), insbesondere die Spiralfeder, hindurchgeführt und am Ende (20) des elastischen Mittels (17) befestigt wird.

7. Sicherheitsvorrichtung gemäß einem der Ansprüche 1 bis 6, umfassend mehrere Kabel (15) und mehrere elastische Mittel (17), insbesondere Spiralfedern, wobei jedes Kabel (15) durch die Ösen (4) mehrerer Unterlegscheiben (1) geführt wird und die zwei Enden (16) jedes Kabels (17) an separaten elastischen Mitteln (17) befestigt werden.

8. Sicherheitsvorrichtung gemäß Anspruch 7, wobei die Enden (16) zweier getrennter Kabel (15) in entgegengesetzter Richtung durch ein gemeinsames elastisches Mittel (17) geführt werden, wobei jedes Ende (16) an dem jeweiligen Ende (20) des elastischen Mittels befestigt wird, oder wobei das Ende (16) des jeweiligen Kabels (15) direkt an dem benachbarten Ende (20) des jeweiligen elastischen Mittels (17) befestigt wird.

9. Sicherheitsvorrichtung gemäß einem der vorhergehenden Ansprüche, wobei das Kabel (15) mittels am Kabel (15) angebrachter Drahtschlösser (19) gesichert wird.

10. Unterlegscheibe für eine Sicherheitsvorrichtung gemäß einem der vorhergehenden Ansprüche mit einem scheibenförmigen Teil (2), der eine Bohrung (3) aufweist, und mit einer an dem scheibenförmigen Teil (2) befestigten Öse (4),
**dadurch gekennzeichnet, dass** die Öse (4) ein Rohr (5) ist, das an der Seite des scheibenförmigen Teils (2) der Unterlegscheibe befestigt ist.

11. Unterlegscheibe gemäß Anspruch 10, wobei die Öse (4) mit dem scheibenförmigen Teil (2) verschweißt ist.

12. Verwendung einer Sicherheitsvorrichtung gemäß einem der Ansprüche 1 bis 9, wobei Bolzenverbindungen, die Teile einer Windturbine, insbesondere eines an einem Fundament (14) befestigten Turmabschnitts (12) oder von aneinander befestigten Turmabschnitten oder von an einer Nabe befestigten Flügeln, verbinden.

## Revendications

1. Dispositif de sécurité pour connexions à boulon comprenant
deux rondelles (1) ou plus avec une partie en forme de disque (2) et un alésage (3) pour recevoir un boulon (10), dans lequel chaque rondelle (1) comprend un œillet (4) fixé à la partie en forme de disque (2), au moins un câble (15) traversant l'œillet (4) et au moins un moyen élastique (17) attaché à au moins une extrémité (16) du câble (15),
**caractérisé en ce que** l'œillet (4) est un tube (5) s'étendant le long d'un côté de la rondelle (4).

2. Dispositif de sécurité selon la revendication 1, chaque rondelle (1) pouvant être montée séparément sur le boulon (10), ou chaque rondelle (1) étant fixée à ou faisant partie intégrante d'un écrou (11) à visser sur un boulon (10).

3. Dispositif de sécurité selon l'une des revendications précédentes, le moyen élastique (17) étant un élément ressort (18) .

4. Dispositif de sécurité selon la revendication 3, l'élément ressort (18) étant un ressort hélicoïdal.

5. Dispositif de sécurité selon l'une des revendications précédentes, le câble (15) passant avec ses deux extrémités (16) en sens opposés à travers le moyen élastique (17), notamment le ressort hélicoïdal, chaque extrémité (16) étant attachée à l'extrémité respective (20) du moyen élastique (17).

6. Dispositif de sécurité selon l'une des revendications 1 à 4, le câble (15) étant attaché avec une extrémité (16) à une rondelle (1) et avec l'autre extrémité (16) traversant le moyen élastique (17), notamment le ressort hélicoïdal et attaché à l'extrémité (20) du moyen élastique (17).

7. Dispositif de sécurité selon l'une des revendications 1 à 6, comprenant plusieurs câbles (15) et plusieurs moyens élastiques (17), notamment des ressorts hélicoïdaux, chaque câble (15) traversant les œillets (4) de plusieurs rondelles (1) et les deux extrémités (16) de chaque câble (17) étant attachées à des moyens élastiques (17) distincts.

8. Dispositif de sécurité selon la revendication 7, les extrémités (16) de deux câbles (15) distincts passant en sens opposés à travers un moyen élastique commun (17), chaque extrémité (16) étant attachée à l'extrémité respective (20) du moyen élastique, ou l'extrémité (16) du câble respectif (15) étant directement attachée à l'extrémité voisine (20) du moyen élastique respectif (17).

9. Dispositif de sécurité selon l'une des revendications précédentes, le câble (15) étant attaché au moyen d'éléments de verrouillage filaires (19) fixés au câble (15).

10. Rondelle pour un dispositif de sécurité selon l'une des revendications précédentes, avec une partie en forme de disque (2) qui comprend un alésage (3) et avec un œillet (4) fixé à la partie en forme de disque (2),
**caractérisée en ce que** l'œillet (4) est un tube (5) fixé au côté de la partie en forme de disque (2) de la rondelle.

11. Rondelle selon la revendication 10, avec l'œillet (4) soudé à la partie en forme de disque (2).

12. Utilisation d'un dispositif de sécurité selon l'une des revendications 1 à 9 avec des connexions à boulon qui connectent des parties d'une éolienne, notamment d'une section de tour (12) fixée à une fondation (14) ou de sections de tour fixées entre elles ou de pales fixées à un moyeu.
